# EUROPEAN PATENT APPLICATION

(11) **EP 4 385 907 A1**
(43) Date of publication of application: **19.06.2024**
(21) Application number: 22290073.0
(22) Date of filing: 15.12.2022
(51) Int. Cl.: B64G 1/24, G01S 19/25, G01S 13/58, B64G 1/10, B64G 1/64, B64G 1/68, B64G 1/66

(54) **SURVEILLANCE OF SPACE DEBRIS BASED ON RADAR AND OPTICAL MEASUREMENTS BY A GROUP OF SATELLITES FLYING IN FORMATION**

(71) Applicant: Airbus Defence and Space GmbH, 82024 Taufkirchen (DE)
(72) Inventor: TOURNEUR, Cyril, 31402 Toulouse cedex 4 (FR); FISCHER, Christian, 88090 Immenstaad am Bodensee (DE)
(74) Representative: Ipside

(57) **Abstract**

A method and a system are proposed for determining an initial orbit of a piece of space debris (15). Each one of a group of at least two satellites (10) flying in formation in orbit around the Earth embed a radar instrument and an optical camera configured to scan a volume of interest that is common to all the satellites of the group. The satellites (10) provide a mix of radar and optical measurements for at least eight independent geometrical parameters of the piece of space debris (15) when it passes in the volume of interest. Each independent geometrical parameter is one of:
- a radar measurement comprising a mono-static range or range rate, or a bi-static range or range rate,
- an optical measurement comprising an azimuth or an elevation angle.

The initial orbit of the piece of space debris (15) is determined based on the measurements provided.

## Description

### Technical field

The present application relates to space debris surveillance, and more particularly to the surveillance of space debris in low Earth orbit. The present application concerns a method and a system for the initial orbit determination of space debris based on both radar and optical measurements performed by a group of satellites flying in formation in orbit around the Earth.

### Prior art

Surveillance of space debris in the low Earth Orbit (LEO) domain is a well-known issue for space missions' deployment and operations. Space debris may result in lethal effects in case of collision with an orbiting asset (with additional debris creation) for debris sizes down to 1 cm and potentially less due to the very high relative velocities (up to 15 km/s for a LEO orbiting asset).

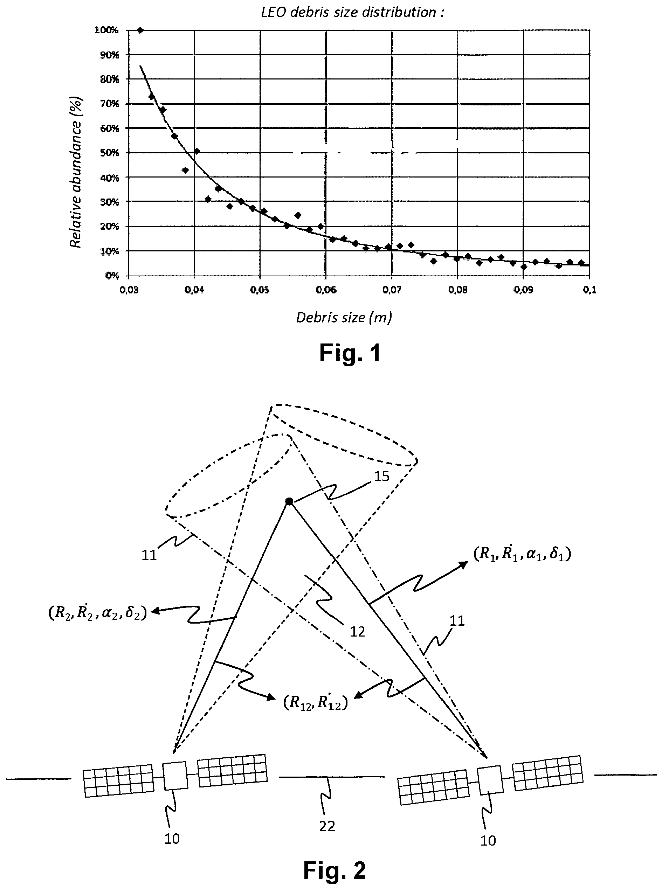

Figure 1 represents a curve depicting the distribution (percentage) of LEO debris size (in meter). As illustrated in Figure 1, the density of space debris in the LEO domain is inversely proportional to a power of around 2.6 of their size. Therefore, surveillance of small size debris is highly needed with regards to the probability of collision due to their significant abundance.

Unfortunately, the minimum size of LEO debris that can be detected and catalogued by ground-based systems is limited (between 10 cm to 5 cm for most systems) and this is essentially due to debris distance and size issues. Indeed, for a radar-based system, the maximum detection range decreases as a function of one quarter of the emitted radar signal power and the debris radar cross section (RCS). For an optical system, the maximum detection range is directly proportional to the square of size to range ratio. In addition, ground-based surveillance systems suffer from impairments due to atmospheric disturbances and weather conditions.

Performing space debris surveillance from space-based observing satellites may offer a work around solution to reduce these issues for small space debris.

The essential purpose of space debris surveillance is the determination of space debris orbital parameters so as to prevent collisions with assets being operated in their orbital vicinity. For this objective, a space debris observation system has to provide a sufficient amount of independent measurement parameters so as to retrieve the state vector of the space debris which includes at least six components (for example a position and a velocity, or the six Keplerian parameters). The process of retrieving an unknown debris state vector is usually called the initial orbit determination (IOD).

IOD determination with space-based systems is however a very difficult challenge. Notably, correlating successive observations, at different times, of a same piece of space debris is particularly challenging. This problem is known as "orbit determination with very short arcs matching". The difficulties to solve this problem are notably related to the very large admissible region in which the debris state vector is bounded following a first observation for which typically two independent measurements are available, the high density of debris observed at each observation inside a very large space of acceptable candidates, and the state vector alterations between each observation due to propagation disturbing forces and related uncertainties such as atmospheric drag in the LEO domain or solar radiation pressure. These issues are worsened for the small debris case due to their increased abundance (high quantity of candidates in the field of view for each observation) and the higher impact of disturbing forces due to their higher surface to mass ratio.

State vector accuracy requirements for space debris cataloguing are very high. The essential rationale for these requirements is related to the fact that debris position and velocity must be predicted with a good accuracy so as to reduce the collision false alarm rate for assets operated in LEO (the probability of collision directly depends on the size of the debris position covariance ellipsoid at time of closest approach).

A typical requirement value is the one considered by the EU SST ("European Space Surveillance and Tracking") consortium stating that the piece of space debris position error along the velocity direction should not exceed 200 m 48 hours following the last observation of the piece of space debris.

Hence, there is a need to improve systems for determining the positions of space debris.

### Disclosure of the invention

The present invention has for objective to remedy to the limitations of the solutions of the prior art, in particular those mentioned hereinabove, by proposing a method and a system for the initial orbit determination of space debris based on radar and optical measurements performed by a group of satellites flying in formation in orbit around the Earth.

To this effect, and according to a first aspect, the invention relates to a method for determining an initial orbit of a piece of space debris orbiting around the Earth. The method comprises:
- placing a group of at least two satellites flying in formation in orbit around the Earth, wherein:
   - each satellite comprises a radar instrument configured to provide a mono-static radar measurement, and/or to participate with another satellite of the group in a bi-static radar measurement of the piece of space debris,
   - each satellite comprises an optical camera configured to provide an optical measurement of the piece of space debris,
   - a boresight direction and a field of view of the optical camera being similar to a boresight direction and a field of view of the radar instrument and defining a boresight direction and a field of view of the satellite,
   - the satellites of the group are configured so that beams defined respectively for each satellite by the boresight direction and the field of view of the satellite are configured to intersect in a volume of interest according to a scanning pattern,
- obtaining from the group of satellites a measurement for at least eight independent geometrical parameters of the piece of space debris when it passes in the volume of interest, each independent geometrical parameter being one of:
   - a radar measurement comprising a mono-static range or range rate of the piece of space debris for a satellite, or a bi-static range or range rate of the piece of space debris for a pair of satellites,
   - an optical measurement comprising an azimuth or an elevation angle of the piece of space debris for a satellite,
   the measurements obtained from the group of satellites being a mix of radar and optical measurements,
- determining an initial orbit of the piece of space debris based on the measurements obtained.

The present invention has a particularly advantageous application, although by no means exhaustive, in the surveillance of low Earth orbit (LEO) space debris.

For conventional space-based systems dedicated to LEO debris surveillance, such as "orbit determination with very short arcs matching", an observation of a piece of debris at a given time usually provides only two independent observation parameters due to the high relative velocities of the piece of debris and the observing satellite and to the limited field of view of the observing instrument. Therefore, at least three separate observations of the same piece of debris at different times are needed to retrieve the six components state vector required to achieve an IOD (at least four observations are usually required to achieve an acceptable IOD).

An advantage of the present invention is that it provides a sufficient number of independent measurements to perform an IOD in a single observation. It hence avoids the problem of "orbit determination with very short arcs matching" which requires correlating successive observations, at different times, of the same piece of space debris.

In addition, using space-based sensors (radar instruments and optical cameras on-board the satellites) offer shorter distance to space debris compared to ground-based sensors (hence smaller debris can be observed). Also, space-based sensors do not suffer from atmospheric or weather effects.

Furthermore, using a mix of radar and optical measurements significantly increases the accuracy of the IOD when it is performed with a single observation as proposed by the present invention.

Another advantage of the present invention is that it is accurate for small space for example with a size less than 5 cm.

In particular embodiments, the invention may further comprise one or more of the following features, taken alone or in any technically possible combination.

In particular embodiments, the piece of space debris is in low Earth orbit.

In particular embodiments, the group of satellites is flying in formation along a Sun-synchronous dawn-dusk orbit.

In particular embodiments, the Sun-synchronous dawn-dusk orbit is an eccentric orbit with an eccentricity parameter comprised between 0.01 and 0.115.

In particular embodiments, the group of satellites comprises at least two satellites. The radar instrument of each of the two satellites comprises a transmission module and a reception module configured for mono-static radar measurement. The reception module of at least one of the two satellites is further configured for bi-static radar measurement based on a signal transmitted by the transmission module of the other satellite and reflected by the piece of space debris. At least ten independent geometrical parameters of the piece of space debris are obtained from the group of satellites, namely:
- a mono-static range and a mono-static range rate of the piece of space debris for each of the two satellites,
- an azimuth and an elevation angle of the piece of space debris for each of the two satellites,
- a bi-static range and a bi-static range rate of the piece of space debris for the pair formed by the two satellites.

In particular embodiments, the group of satellites comprises at least a master satellite and two companion satellites. The radar instrument of the master satellite comprising a transmission module and a reception module configured for mono-static radar measurement. The radar instrument of each of the two companion satellites comprising a reception module configured for bi-static radar measurement based on a signal transmitted by the transmission module of the master satellite and reflected by the piece of space debris. At least twelve independent geometrical parameters of the piece of space debris are obtained from the group of satellites, namely:
- a mono-static range and a mono-static range rate of the piece of space debris for the master satellite,
- an azimuth and an elevation angle of the piece of space debris for the master satellite and for each of the two companion satellites,
- a bi-static range and a bi-static range rate of the piece of the space debris for each pair formed by the master satellite and each of the two companion satellites.

In particular embodiments, the satellites of the group are flying in an "in line" formation, meaning that at a given time all orbital parameters of the different satellites are essentially identical at the exception of the true anomaly.

In particular embodiments, the group comprises at least three satellites flying in a "cartwheel" formation, all the satellites at the exception of a central satellite (10-c) having an eccentricity offset with regard to the central satellite and a perigee argument phase difference so as to form an ellipse in the orbital plane.

In particular embodiments, at least two satellites of the group each comprise a GNSS receiver and communicate with one another via an inter-satellite link to exchange differential GNSS measurements for improving a determination of a position and a velocity of each of the two satellites.

In particular embodiments, at least one of the satellites of the group comprises a DORIS receiver for improving a determination of a position and a velocity of the satellite.

In particular embodiments, wherein at least two satellites of the group communicate with one another via an inter-satellite link to perform clock synchronization of their radar instrument.

In particular embodiments, for at least one satellite of the group, the boresight direction of the satellite is orientated by electronically steering the radar instrument and mechanically steering the optical camera, and/or by steering the satellite's body.

According to a second aspect, the invention relates to a space surveillance system comprising a group of at least two satellites intended to fly in formation in orbit around the Earth, wherein: each satellite comprises a radar instrument configured to provide a mono-static radar measurement, and/or to participate with another satellite of the group in a bi-static radar measurement of the piece of space debris; each satellite comprises an optical camera configured to provide an optical measurement of the piece of space debris; a boresight direction and a field of view of the optical camera are similar respectively to a boresight direction and a field of view of the radar instrument and defining a boresight direction and a field of view of the satellite; the satellites of the group are configured so that beams defined respectively for each satellite by the boresight direction and the field of view of the satellite are configured to intersect in a volume of interest according to a scanning pattern; the satellites of the group are configured to provide a measurement for at least eight independent geometrical parameters of the piece of space debris when it passes in the volume of interest, each independent geometrical parameter being one of:
- a radar measurement comprising a mono-static range or range rate of the piece of space debris for a satellite, or a bi-static range or range rate of the piece of space debris for a pair of satellites,
- an optical measurement comprising an azimuth or an elevation angle of the piece of space debris for a satellite,
- the measurements provided being a mix of radar and optical measurements and being used for determining an initial orbit of the piece of space debris.

In particular embodiments, the group of satellites comprises at least two satellites. The radar instrument of each of the two satellites comprises a transmission module and a reception module configured for mono-static radar measurement. The reception module of at least one of the two satellites is further configured for bi-static radar measurement based on a signal transmitted by the transmission module of the other satellite and reflected by the piece of space debris. The group of satellites is configured to provide at least ten independent geometrical parameters of the piece of space debris when it passes in the volume of interest, namely:
- a mono-static range and a mono-static range rate of the piece of space debris for each of the two satellites,
- an azimuth and an elevation angle of the piece of space debris for each of the two satellites,
- a bi-static range and a bi-static range rate of the piece of space debris for the pair formed by the two satellites.

In particular embodiments, the group of satellites comprises at least a master satellite and two companion satellites. The radar instrument of the master satellite comprises a transmission module and a reception module configured for mono-static radar measurement. The radar instrument of each of the two companion satellites comprises a reception module configured for bi-static radar measurement based on a signal transmitted by the transmission module of the master satellite and reflected by the piece of space debris. The group of satellites is configured to provide at least twelve independent geometrical parameters of the piece of space debris when it passes in the volume of interest, namely:
- a mono-static range and a mono-static range rate of the piece of space debris for the master satellite,
- an azimuth and an elevation angle of the piece of space debris for the master satellite and for each of the companion satellites,
- a bi-static range and a bi-static range rate of the piece of the space debris for each pair formed by the master satellite and each of the two companion satellites.

In particular embodiments, the group comprises at least three satellites. The radar instrument of each of the three satellites comprises a transmission module and a reception module configured for mono-static radar measurement and for bi-static radar measurement based on a signal transmitted by the transmission module of any one of the two other satellites and reflected by the piece of space debris. The group of satellites is configured to provide at least eighteen independent geometrical parameters of the piece of space debris when it passes in the volume of interest, namely:
- a mono-static range and a mono-static range rate of the piece of space debris for each of the three satellites,
- an azimuth and an elevation angle of the piece of space debris for each of the three satellites,
- a bi-static range and a bi-static range rate of the piece of the space debris for each pair of satellites that can be formed from the three satellites.

### Presentation of the figures

The invention will be better understood when reading the following description, given as a non-limiting example, and made with reference to the figures listed below:
- Figure 1 is a graph depicting the distribution of LEO debris size,
- Figure 2 schematically represents an example of a space surveillance system according to the invention,
- Figure 3 schematically represents two satellites flying in formation along a Sun-synchronous dawn-dusk orbit,
- Figure 4 schematically represents two satellites flying in formation along an eccentric Sun-synchronous dawn-dusk orbit,
- Figure 5 schematically illustrates a preferred orientation for the beam of a satellite for the observation of space debris,
- Figure 6 schematically represents three satellites flying in a "cartwheel" formation along an orbit,
- Figure 7 schematically represents the main steps of a method according to the invention for determining an initial orbit of space debris,
- Figure 8 is a graph depicting the distribution of LEO debris orbital inclination,
- Figure 9 is a graph depicting the distribution of LEO debris altitude,
- Figure 10 is a graph depicting the radar cross section (RCS) of space debris as a function of their size,
- Figure 11 is a histogram depicting the distribution of the range rate of space debris detected by a system according to a specific embodiment of the invention,
- Figure 12 is a histogram depicting the distribution of the range acceleration of space debris,
- Figure 13 is a graph depicting the radar range and range rate resolution errors as a function of the chirp bandwidth of the radar,
- Figure 14 is a graph depicting the apparent magnitude of space debris as a function of their size,
- Figure 15 is a histogram depicting the distribution of space debris angular velocity,
- Figure 16 is a graph depicting the relative angular velocity of space debris as a function of their apparent magnitude,
- Figure 17 is a histogram depicting the distribution of the size of detected space debris,
- Figure 18 is a histogram depicting the distribution of the detection range (distance to the center of the baseline) of detected space debris,
- Figure 19 is a cross correlation of detection range and size of the detected space debris,
- Figure 20 is a graph depicting the detection range (distance to the center of the baseline) as a function of the baseline (length of the baseline).

In these figures, identical references from one figure to another refer to identical or similar elements. For reasons of clarity, the elements shown are not necessarily to the same scale, unless otherwise stated.

### Detailed description of embodiments

Figure 2 represents schematically an example of a space surveillance system according to the invention. The satellites are used for the detection and cataloguing of space debris. To this end, the satellites are used to provide measurements on a piece of space debris orbiting around the Earth and passing in vicinity of the group of satellites, with a view to determining an initial orbit of the piece of space debris.

The system comprises a group of at least two satellites 10 intended to fly in formation in orbit around the Earth 20. In the example illustrated on figure 2, the system comprises two satellites 10. It is to be noted however that the system could comprise a group of more than two satellites, for example three or four satellites 10, or even more. Flying in formation means that the satellites of the group remain close to each other, for example at a distance of less than 300 kms, throughout their orbit around the Earth. The maximum distance between the satellites may be defined as a function of the maximum detection range of the sensors (for example the maximum distance between two satellites may be two times the maximum detection range of the radar instrument).

Each satellite 10 comprises a radar instrument configured to provide a mono-static radar measurement, and/or to participate with another satellite 10 of the group in a bi-static radar measurement of the piece of space debris 15. According to a first example, the radar instrument may comprise both a reception module and a transmission module configured for mono-static radar measurements. According to a second example, the radar instrument may only comprise a reception module configured for bi-static radar measurement based on a signal transmitted by the transmission module of another satellite of the group and reflected by the piece of space debris 15. According to a third example, the radar instrument may only comprise a transmission module configured for transmitting a signal that will be used for bi-static radar measurement by another satellite of the group after the signal is reflected by the piece of space debris 15. According to a fourth example, the radar instrument may comprise both a reception module and a transmission module configured for both mono-static and bi-static radar measurements.

When bi-static radar measurements are involved between two satellites, a radio frequency inter-satellite link (ISL) can be used for radar clocks synchronization so as to further improve the bi-static measurements accuracy.

Each satellite 10 of the group also comprises an optical camera configured to provide an optical measurement of the piece of space debris 15. More particularly, the optical camera allows to provide an azimuth and/or an elevation angle of the piece of space debris 15.

The boresight direction and the field of view of the optical camera are similar to those of the radar instrument. They define a boresight direction and a field of view of the satellite. In other words, the radar instrument has essentially the same boresight direction as the one of the optical camera, and the radar instrument has essentially the same field of view of the one of the optical camera (the radar instrument and the optical camera are co-registered). The idea is that, for a given satellite 10, an observed piece of space debris 15 is both in the radar instrument's observation cone and in the optical camera's observation cone. For example, the solid angle defining the radar's field of view and the solid angle defining the camera's field of view do not differ by more than 20%; similarly, the angular distance between the two boresights does not exceed for example more than 20% of the half angle of the equivalent conical solid angle of the smallest field of view. The field of view of the radar's instrument may for example correspond to the 3 dB aperture of the main lobe of the radar's radiation pattern.

The satellites of the group are configured so that beams 11 (observation cones) defined respectively for each satellite 10 by the boresight direction and the field of view of the satellite are configured to intersect at any given instant in a volume of interest 12 so as to detect and enable IOD of space debris passing in this volume. The relative boresight directions of the satellites are orientated according to a steering pattern so as to scan the desired volume of interest 12. Different steering laws can be considered for the beams 11, with several degrees of freedom such as in plane and out of plane steering periods, amplitude and phasing between the satellites 10. For each satellite 10, the boresight direction of the satellite can be orientated by electronically steering the radar instrument and mechanically steering the optical camera, and/or by steering the satellite's body.

The group of satellites 10 are configured to provide a measurement for at least eight independent geometrical parameters of the piece of space debris 15 when it passes in the volume of interest 12.

Each independent geometrical parameter may be a radar measurement comprising a mono-static range or range rate of the piece of space debris 15 for a satellite 10, or a bi-static range or range rate of the piece of space debris 15 for a pair of satellites 10. The range corresponds to the distance between the piece of space debris and the radar instrument performing the measurement. The range rate corresponds to the radial component of the velocity of the piece of space debris 15 relative to the radar instrument. The range rate is measured by using the Doppler effect and by analyzing how the motion of the piece of space debris 15 has altered the frequency of a reflected signal. On figure 2, *R*₁ and *R*₂ represent the ranges to the piece of space debris 15 measured respectively by each of the two satellites 10; *Ṙ*₁ and *Ṙ*₂ represents the range rates of the piece of space debris 15 measured respectively by each of the two satellites 10; *R*₁₂ represents a bi-static range measured by either one of the two satellites 10 based on a signal transmitted by the other satellite and reflected by the piece of space debris 15; *Ṙ*₁₂ represents a bi-static range rate measured by either one of the two satellites 10 based on a signal transmitted by the other satellite and reflected by the piece of space debris 15.

Each independent geometrical parameter may also be an optical measurement comprising an azimuth or an elevation angle of the piece of space debris 15 for a satellite 10. On figure 2, *α*₁ and *α*₂ represent the azimuth of the piece of space debris 15 measured respectively by each of the two satellites 10; *δ*₁ and *δ*₂ represent the elevation angle of the piece of space debris 15 measured respectively by each of the two satellites 10.

Advantageously, the measurements provided are a mix of radar and optical measurements (meaning that the measurements set comprises at least one radar measurement and at least one optical measurement). Indeed, and as will be detailed later, the combination of both kind of measurements provides a significant increased amount of independent and high accuracy measurements.

It can be noted also that, for debris with moderate to low relative velocity, the system provides an attractive geometrical diversity of the measurements all along the observation sequence (as long as the debris stays in the sensors co-registered field of view), eventually improving the accuracy of the IOD.

Each satellite 10 of the group may also comprise a GNSS receiver for determining a position and a velocity of the satellite (GNSS is the acronym for "Global Navigation Satellite Systems"). Alternatively, the position and velocity of the satellite could be determined by the ground segment using TT&C ranging techniques (TT&C is the acronym for "Telemetry, Tracking and Command"). The geometrical parameters relating to the position and/or velocity of the debris measured by the satellite can thus be defined in relation to geometrical coordinates of the satellite. All the geometrical parameters measured by the different satellites 10 can thus be defined in an ad hoc reference frame that is common to all the satellites 10.

When GNSS receivers are used on board at least two satellites of the group, differential GNSS may also be used for those satellites 10 with a view to determining the position and the velocity of the satellites more accurately. In that case, an inter-satellite link (ISL) may be used to exchange differential GNSS measurements among the satellites that are involved in the process.

Alternatively, or complementarily, one or more of the satellites 10 of the group may comprise a DORIS receiver (acronym for "Doppler Orbitography by Radio positioning Integrated on Satellite") for increasing the accuracy of the determination of the position and velocity of the satellites.

Four examples of embodiments are given below for illustrative purposes.

A first embodiment comprises a group of two satellites 10 (it is to be noted that the term "comprises" does not preclude the possibility to have other additional satellites in the group). The radar instrument of each satellite 10 comprises a transmission module and a reception module configured for mono-static radar measurement. The satellites 10 are configured to provide at least the following eight independent geometrical parameters of the piece of space debris 15 when it passes in the volume of interest 12:
- a mono-static range and a mono-static range rate of the piece of space debris 15 for each of the two satellites 10,
- an azimuth and an elevation angle of the piece of space debris 15 for each of the two satellites 10.
Hence, in this first embodiment, the measurement vector can be seen as *Y* = [*R*₁, *Ṙ*₁, *R*₂, *Ṙ*₂, *α*₁, *δ*₁, *α*₂, *δ*₂]*^{t}*.

Of course, nothing prevents from following the example of this first embodiment with more than two satellites. When considering N satellites similar to those of the first embodiment, the number of independent geometrical parameters for an observed piece of space debris may for example be 4 × N (a mono-static range, a mono-static range rate, an azimuth and an elevation angle for each satellite).

A second embodiment is similar to the first embodiment at the exception that the reception module of at least one of the two satellites 10 is further configured for bi-static radar measurement based on a signal transmitted by the transmission module of the other satellite 10 and reflected by the piece of space debris 15. In this second embodiment, the satellites 10 are configured to provide at least the following ten independent geometrical parameters of the piece of space debris 15 when it passes in the volume of interest 12:
- a mono-static range and a mono-static range rate of the piece of space debris 15 for each of the two satellites 10,
- an azimuth and an elevation angle of the piece of space debris 15 for each of the two satellites 10,
- a bi-static range and a bi-static range rate of the piece of space debris 15 for the pair formed by the two satellites 10.
Hence, in this first embodiment, the measurement vector can be seen as *Y* = [*R*₁, *Ṙ*₁, *R*₂, *Ṙ*₂, *R*₁₂, *Ṙ*₁₂, *α*₁, *δ*₁, *α*₂, *δ*₂]*^{t}*. The bi-static range and range rate measurements are partially correlated to the mono-static ones but they still provide useful information in terms of IOD accuracy (hence, the bi-static range and range rate measurements are considered in the present document as "independent" parameters with regards to the mono-static range and range rate measurements). Performance assessments have shown that these two bi-static measurements provide an average of 10% to 20% improvement of the IOD accuracy versus the purely mono-static configuration of the first embodiment.

In a third embodiment, the group of satellites 10 comprises at least a master satellite and two companion satellites. The radar instrument of the master satellite comprises a transmission module and a reception module configured for mono-static radar measurement. The radar instrument of each of the two companion satellites comprises a reception module configured for bi-static radar measurement based on a signal transmitted by the transmission module of the master satellite and reflected by the piece of space debris 15. In this third embodiment, the satellites 10 are configured to provide at least the following twelve independent geometrical parameters of the piece of space debris 15 when it passes in the volume of interest 12:
- a mono-static range and a mono-static range rate of the piece of space debris 15 for the master satellite,
- an azimuth and an elevation angle of the piece of space debris 15 for the master satellite and for each of the two companion satellites,
- a bi-static range and a bi-static range rate of the piece of the space debris 15 for each pair formed by the master satellite and each of the two companion satellites.
Hence, in this third embodiment, the measurement vector can be seen as *Y* = [*R*₁, *Ṙ*₁, *R*₁₂, *Ṙ*₁₂, *R*₁₃, *Ṙ*₁₃, *α*₁, *δ*₁, *α*₂, *δ*₂, *α*₃, δ₃]*^{t}*. In this expression, the index '1' is used for the master satellite and the indices '2' and '3' are used respectively for each of the companion satellites.

This embodiment may be advantageous in the sense that the companion satellites only need a receiver module for the radar instrument (hence less complexity, less energy required, etc.).

Of course, nothing prevents from associating more than two companion satellites with the master satellite. In the case of N companion satellites, the number of independent geometrical parameters for an observed piece of space debris may for example be 4 + 4 × N (a mono-static range, a mono-static range rate, an azimuth and an elevation angle for the master satellite, and a bi-static range, a bi-static range rate, an azimuth and an elevation angle for each of the companion satellite).

In a fourth embodiment, the group of satellites comprises three satellites 10. The radar instrument of each satellite 10 comprises a transmission module and a reception module configured for mono-static radar measurement and for bi-static radar measurement based on a signal transmitted by the transmission module of any one of the two other satellites 10 and reflected by the piece of space debris 15. In this fourth embodiment, the satellites 10 are configured to provide at least the following eighteen independent geometrical parameters of the piece of space debris 15 when it passes in the volume of interest 12:
- a mono-static range and a mono-static range rate of the piece of space debris 15 for each satellite 10,
- an azimuth and an elevation angle of the piece of space debris 15 for each satellite 10,
- a bi-static range and a bi-static range rate of the piece of the space debris 15 for each pair of satellites 10.
Hence, in this fourth embodiment, the measurement vector can be seen as *Y* = [*R*₁, *Ṙ*₁, *R*₂, *Ṙ*₂, *R*₃, *Ṙ*₃, *R*₁₂, *Ṙ*₁₂, *R*₁₃, *Ṙ*₁₃, *R*₂₃, *Ṙ*₂₃, *α*₁, *δ*₁, *α*₂, *δ*₂, *α*₃, *δ*₃]*^{t}*.

Again, nothing prevents from following the example of the fourth embodiment with more than three satellites. When considering N satellites similar to those of the fourth embodiment, the number of independent geometrical parameters for an observed piece of space debris may for example be 4 × N + N × (N - 1) (a mono-static range, a mono-static range rate, an azimuth and an elevation angle for each satellite, and a bi-static range and a bi-static range rate for each pair of satellites that can be formed from the N satellites).

The expression "flying in formation" means that the satellites of the group remain close to each other throughout their orbit around the Earth. The maximum distance separating the satellites of the group may for example depend on the detection range of the radar instrument and/or on the sensitivity of the optical camera. For example, the maximum distance separating two satellites of the group may be defined as two times the maximum detection range of the radar instrument.

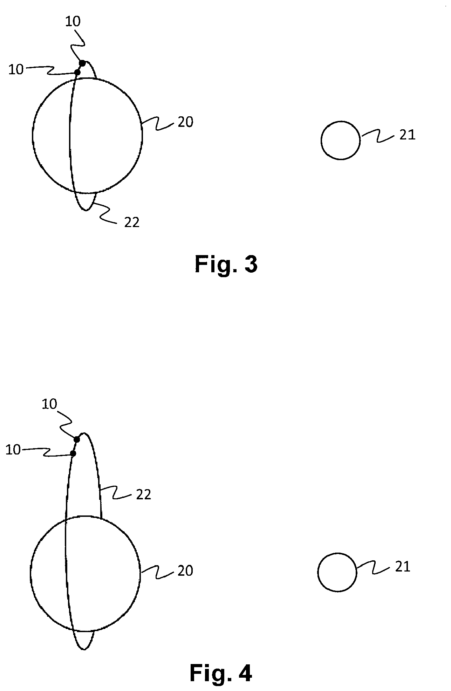

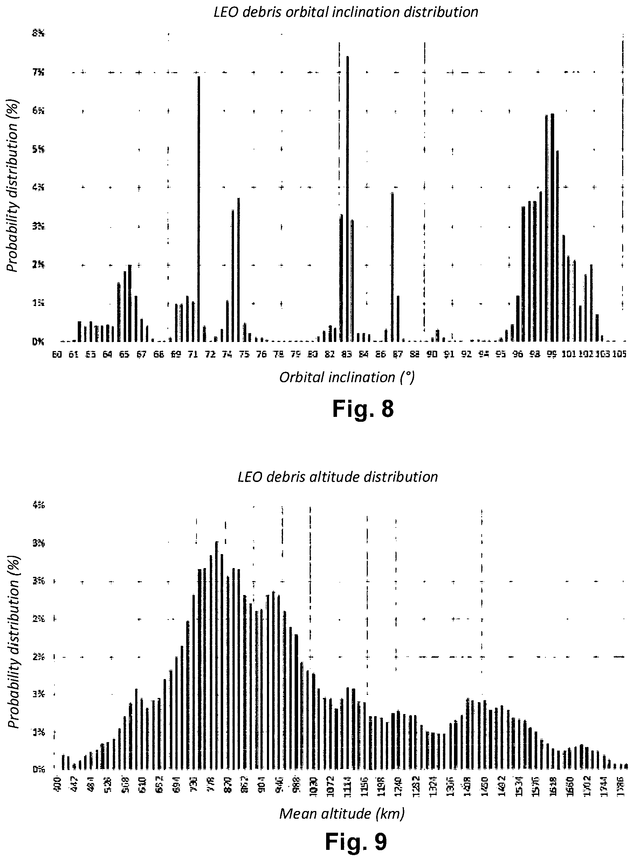

The invention is particularly advantageous, although by no means exhaustive, for the surveillance of low Earth orbit (LEO) space debris. In that case, it is advantageous that the satellites 10 fly in formation along a Sun-synchronous dawn-dusk orbit 22, as depicted in figure 3. In figure 3, the Earth is represented with reference 20 while the Sun is represented with reference 21. A Sun-synchronous orbit, also called heliosynchronous orbit, is a nearly polar orbit arranged so that the right ascension of the ascending node (RAAN) precesses through one complete revolution each year (thus maintaining the same relationship with the Sun). For a Sun-synchronous dawn-dusk orbit 22, the local time of the ascending node (LTAN) is around sunrise (e.g. 6:00 am) or sunset (e.g. 6:00 pm). The dawn-dusk SSO orbit 22 provides several advantages for the purpose of the invention. Firstly, it provides very low solar eclipse duration during an orbital revolution. This provides high solar energy generation capacities for the radar instrument. It also provides solar illumination of the space debris for the optical camera. In addition, thanks to its nearly polar inclination (around 98° for 700 km altitude orbit), a dawn-dusk SSO orbit 22 also provides good coverage of the LEO space debris population according to their orbital inclination distribution. The histogram in figure 8 depicts the distribution of LEO space debris orbital inclination. This explains why most LEO space debris observations are performed in the vicinity of the polar areas (North and South Poles).

For example, and as illustrated on figure 3, a system according to the second embodiment may be operated on a Sun-synchronous dawn-dusk orbit 22 (with a LATAN 6:00 am or 6:00 pm) at a mean altitude of around 700 km with the two satellites 10 placed on the same orbital plane with an along track separation (baseline) between 50 and 200 km.

The histogram in figure 9 depicts the distribution of the altitude of LEO space debris. It appears that the LEO space debris are mainly located at an altitude between 600 km and 1100 km. Using an eccentric SSO orbit 22, as illustrated on figure 4, can offer altitude variations so as to cover a larger debris altitude domain. Thanks to J2 secular precession of the argument of the perigee, a continuous and extended altitude domain coverage could be achieved over polar areas, for which the space debris density is the highest, and provide a better coverage of the LEO debris population with regard to their altitude distribution. The eccentricity parameter can be selected for example to be comprised between 0.01 and 0.115, so as to provide perigee and apogee altitude respectively between 300 km and 2000 km so as to cover a large proportion of the LEO space debris population.

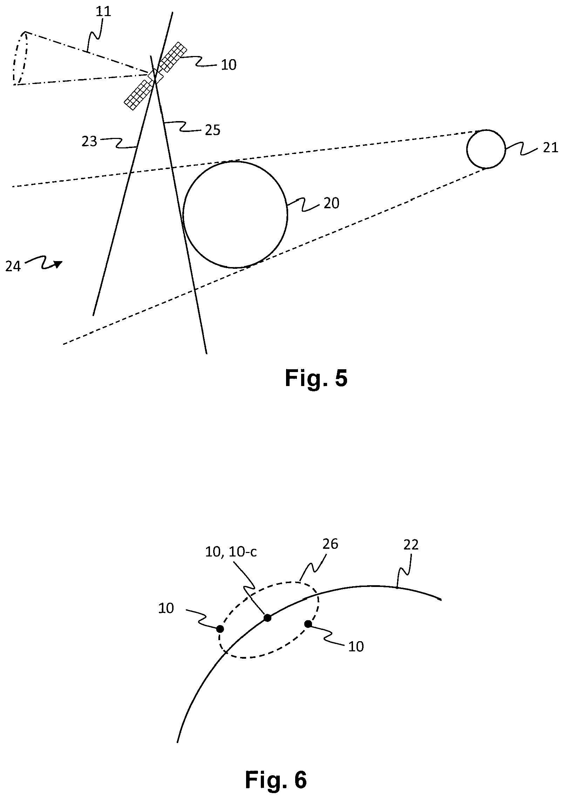

Figure 5 schematically illustrates a preferred orientation for the beam 11 of a satellite 10 for the observation of space debris (the beam 11 corresponds to the boresight direction and field of view of the co-registered sensors, namely the radar instrument and the optical camera).

A preferred observation domain may be defined for the scanning pattern of the volume of interest 12 where space debris may be observed. As depicted on figure 5, the preferred observation domain may advantageously be chosen so that it is opposed to the Sun with regards to the satellite. Indeed, in such an observation domain, the solar illumination of the observed space debris is optimal for the optical camera because the solar phase angle is comprised between around 0° for observations opposite to the Sun direction and up to around 90° for observations along the radial vector of the satellite 10. On the example depicted on figure 5, it means that the observation domain belongs to the space opposite to the Sun 21 with regards to a plane 23 passing by the satellite 10 and orthogonal to a direction linking the Sun 21 and the satellite 10.

The observation domain may also be chosen so that it does not contain the Earth shadow area 24 because space debris in that eclipse area are not illuminated by the Sun. On figure 5, the Earth shadow area 24 corresponds to the space area where the irradiance of the Sun 21 is hidden by the Earth 20.

The observation domain may also be chosen so that the Earth is not in the sensors' field of views because it augments the receiver temperature for the radar (hence reducing its detection range), it creates parasitic background for the optical camera (for example artificial lightings or lunar diffuse reflections on clouds) and it reduces the detectable magnitude (hence the detection range). On the example depicted on figure 5, it means that the observation domain shall not go beyond the plane 25 passing by the satellite 10 and tangent to the Earth's surface.

Different formation flying configurations can be considered. For example (and as illustrated by figures 2 to 5), the satellites 10 of the group may fly in an "in line" formation, meaning that at a given time all orbital parameters of the different satellites 10 are essentially identical at the exception of the true anomaly. In such a case, and for a system according to the third embodiment as previously described, the master satellite is advantageously placed in the middle of the formation.

As another example, the satellites 10 of the group may fly in a "cartwheel" formation, as depicted in figure 6, wherein all the satellites 10, at the exception of a central satellite 10-c, have an eccentricity offset with regard to the central satellite 10-c and a perigee argument phase difference so as to form an ellipse 26 in the orbital plane. This configuration is more naturally adapted for out of plane observations. For a system according to the third embodiment as previously described, the master satellite corresponds to the central satellite 10-c. One of two companion satellites may for example present a 90° perigee argument phase difference with the master satellite, while the other companion may present a 180° perigee argument phase difference with the master satellite

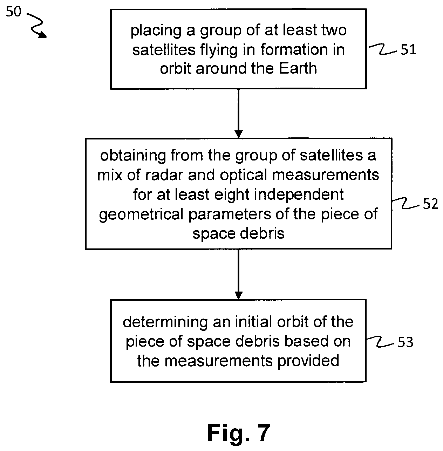

Figure 7 illustrates the main steps of a method 50 for determining an initial orbit of a piece of space debris 15 orbiting around the Earth 20.

The method 50 first comprises a step of placing 51 a group of at least two satellites 10 flying in formation in orbit around the Earth 20. The satellites 10 may be configured according to any one of the embodiments described previously.

The method 50 then comprises a step of obtaining 52 from the group of satellites 10 a measurement for at least eight independent geometrical parameters of the piece of space debris 15 when it passes in the volume of interest 12. As previously described, each independent geometrical parameter may be a radar measurement comprising a mono-static range or range rate of the piece of space debris 15 for a satellite 10, or a bi-static range or range rate of the piece of space debris 15 for a pair of satellites 10. The measurements provided are a mix of radar and optical measurements (meaning that the measurements set comprises at least one radar measurement and at least one optical measurement).

The method 50 then comprises a step of determining 53 an initial orbit of the piece of space debris 15 based on the measurements provided. The initial orbit determination (IOD) at step 53 may for example be performed by an on-ground equipment (a computer located on Earth) based on the measurements provided by the satellites of the system. In that case, the measurements may be communicated to the on-ground equipment via radio links established between the Earth and the satellites. Alternatively, one of the satellites of the group may be responsible for collecting the measurements performed by the different satellites (via inter-satellite links) and communicating them to the Earth. Alternatively, all or part of the processing required for the IOD may be performed by at least one of the satellites of the group.

### The radar instrument:

Relatively high frequencies have to be considered with regards to the small size of the targeted space debris (in the example considered, the targeted size of the space debris is around 5 to 50 mm). Two frequencies have been considered for the operation of the radar instrument: 25 GHz and 50 GHz. It is to be noted however that different frequencies of operation could be used, depending on the size of the targeted space debris. For example, frequencies of operation comprised between a few GHz (e.g. 5 GHz) up to 100 GHz could be used (hence including bands X, Ku, K, Ka, V and W).

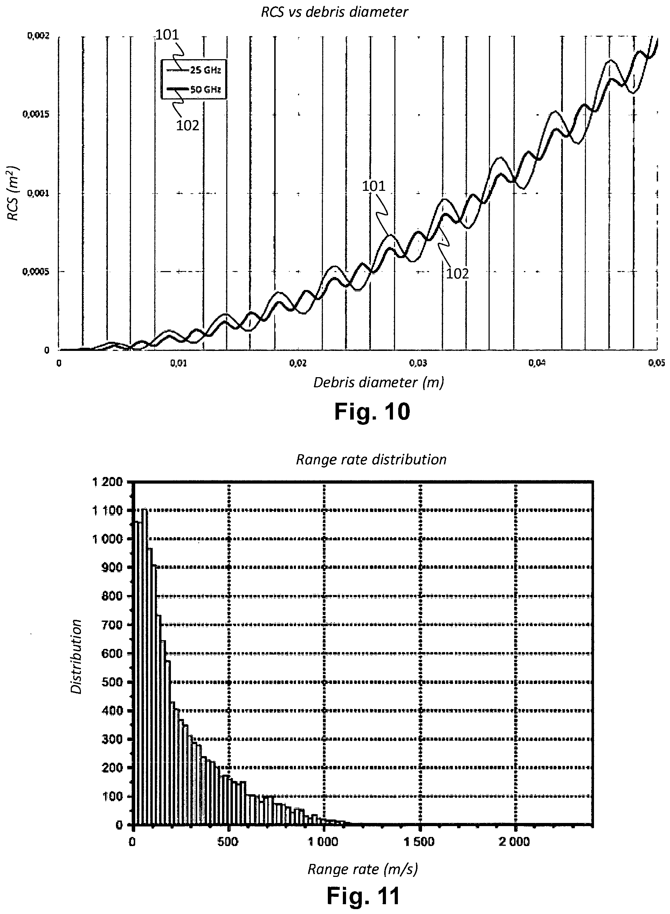

The radar cross section (RCS) of the space debris as a function of their diameter for the targeted size domain is provided in figure 10. On figure 10, the curve with reference 101 depicts the RCS for the 25 MHz frequency; the curve with reference 102 depicts the RCS for the 50 MHz frequency. The curves depicted on figure 10 unveil a slight preference for the 50 GHz frequency as the RCS fluctuations are lower at that frequency.

In the considered example, the average power and the peak power for the radar instrument are respectively of 600 W and 2500 W.

Different radar instrument configurations could be considered. As a first example, a radar based on an active phased array antenna with single transmit/receive (T/R) modules may be used. Each T/R module may conventionally integrate an electronic phase shifter, a digital controlled attenuator, a power amplifier, an ambient temperature low noise amplifier (LNA) and a duplexer.

As a second example, a radar based on a static antenna with separated emitter and receiver modules may be used. In that second example, the receiver module may integrate a cryogenic LNA.

The option corresponding to the first example provides more flexibility for antenna pattern shaping and beam steering for scan law implementation. On the other hand, this option has a higher system temperature, reducing the maximum detection range. The option corresponding to the second example provides appreciable range improvement (around 43% of improvement in average for the 50 GHz frequency, around 35% of improvement for the 25 GHz frequency). However, it does not allow dynamical antenna radiation pattern modifications nor electronical steering capabilities. In that case, sensors' boresight steering can be performed with satellite attitude modifications.

The antenna area considered for preliminary performances assessment has been arbitrarily fixed to 1 m² (one square meter). However, there is nothing to prevent the consideration of larger surfaces. The selected square antenna pattern is shaped (with an ad hoc conformed reflector for the option with the cryogenic LNA) so as to provide a 3 dB aperture of about 6 × 6°, roughly matching the field of view of the optical camera, and a 29 dBi gain. This beam spreading approach corresponds respectively to a field of view enlargement of a factor 20 and 10 respectively for the 50 GHZ frequency and for the 25 GHz frequency, and a gain reduction of about 20 and 26 dB respectively.

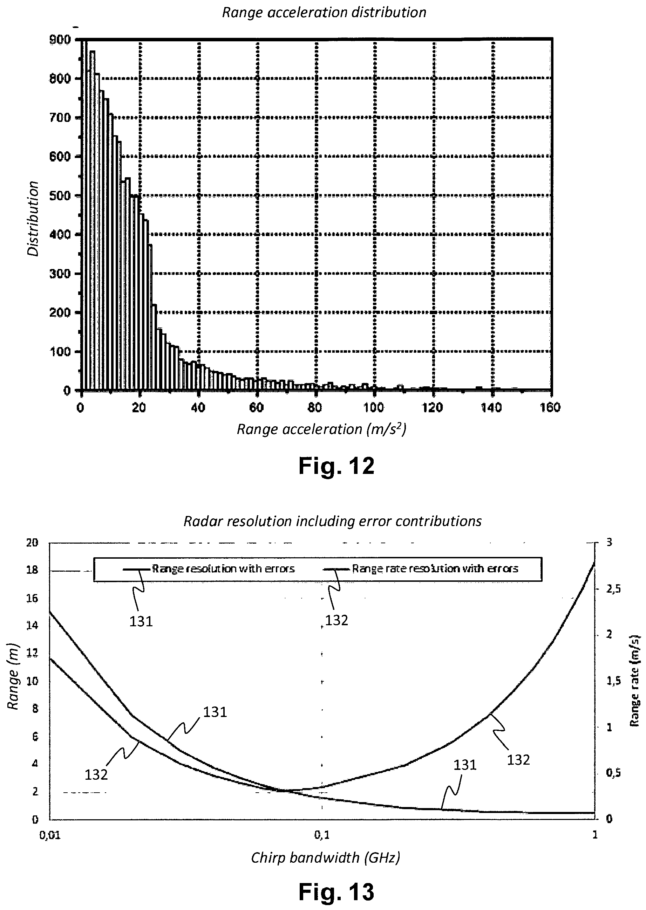

Figures 11 and 12 show histograms (obtained with a Monte-Carlo method) depicting respectively the distribution of the range rate (in m/s) and the distribution of range acceleration (in m/s²) of LEO space debris detected by a system according to the second embodiment (two satellites 10 flying in an "in line" formation on a SSO orbit 22) with a radar instrument operating at 50 GHz according to the second example described above with the cryogenic LNA.

As can be seen on these histograms, there is a high range for velocities and accelerations of detectable space debris. As a consequence, it is advantageous to select a chirp bandwidth and a pulse duration for the radar instrument so as to maintain the space debris range and range rate variations inside the same range and range rate resolution bin during a coherent integration time. As an indirect consequence, for high chirp bandwidth values (and resulting low pulse durations), the Doppler error increases as an inverse function of the pulse duration, leading to high range resolution errors for high bandwidth values (the bandwidth could be set up to 4 GHz with regards to technological capacities).

Figure 13 provides two curves respectively for the range resolution errors (curve with reference 131, in m) and the range resolution errors (curve with reference 131, in m/s) as a function of the chirp bandwidth (in GHz). The curves depicted on figure 13 unveil a sweet spot trade-off around 100 MHz for the chirp bandwidth.

The required detection signal-to-noise ratio (SNR) can be established by taking into account both the frequents requirements provided considered for SST and the post processing requirements with regards to space debris range velocity and acceleration. For example, a false alarm probability of 10⁻³ per square degree per observation and a detection probability of 95% can be considered, leading to a minimum SNR of 9.6 dB due to the considered extended field of view of around 6°. The post processing needed with regards to space debris range velocity and acceleration call for an additional SNR requirement of around 7.4 dB for a chirp bandwidth of 100 MHz. Consequently, a minimum SNR of around 16.9 dB for debris detection can be taken into account.

Various pulse repetition frame (PRF) patterns could be considered for range disambiguation. In the example considered, a PRF of about 190 Hz has been considered.

### The optical camera:

Different options could be considered for the optical camera. As a first example, the optical camera may be a dioptric camera based on a detection matrix of 12 megapixels and a 100 mm aperture dioptric camera with a focal length to aperture size ratio N = f/D = 1.4 offering a rectangular field of view of 4.2 × 5.8° for an instantaneous field of view (IFOV) of 25 µrad (microradians). Note that smaller f/D ratio could be considered so as to provide a larger field of view.

As a second example, the optical camera may be a small three-mirror anastigmat (TMA) telescope based on a detection matrix of 128 megapixels and a 270 mm equivalent aperture telescope with N = f/D = 2 offering a rectangular field of view of 3.8 × 5.4° for an IFOV of 7 µrad.

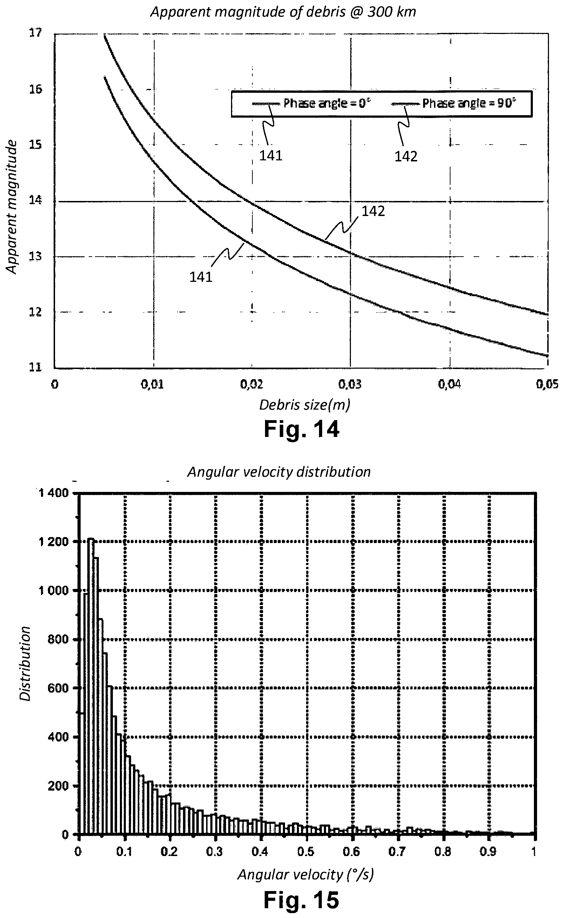

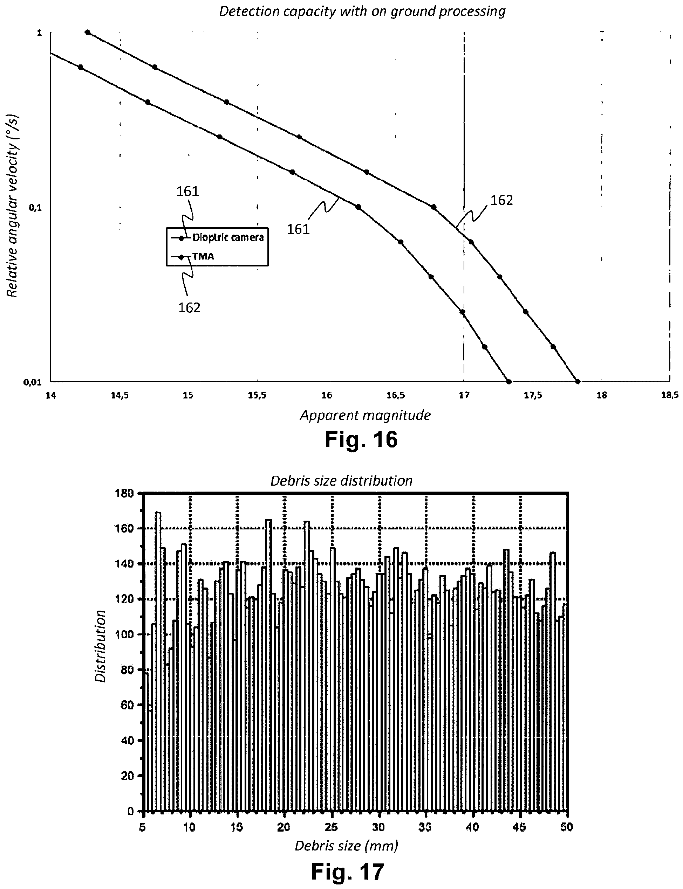

The detection chain sizing is mostly imposed by the small size of the targeted space debris and the potentially high angular velocity of the debris that can be detected by the radar. Figure 14 shows two curves representing the apparent magnitude of space debris located at the radar maximum detection range of about 300 km for the 50 GHz cryogenic LNA option, as a function of the size (in m) of the space debris, respectively for a solar phase angle of 0° (curve with reference 141) and for a solar phase angle of 90° (curve with reference 142). Figure 15 shows a histogram depicting the distribution of angular velocity (in °/s) of space debris. As shown by figure 15, the angular velocity may go up to 1 °/s. Accordingly, a frame rate of around 4.5 Hz and a rolling buffer of around 200 images for an observation sequence have been chosen for the detection chain set. The corresponding expected detection performance for the two options considered are illustrated on Figure 16. The curve with reference 161 corresponds to the first option with the dioptric camera; the curve with reference 162 corresponds to the second option with the TMA telescope. The curves represent the relative angular velocity as a function of the apparent magnitude of a piece of space debris.

Considering the modest detection gain provided by the option with the TMA telescope with regards to its cost, size, weight, power and data volume, the option with the dioptric camera is preferred.

Note that, thanks to the optical camera high sensitivity, the satellite pointing absolute knowledge error (AKE) can significantly be reduced by exploiting the numerous stars present in the field of view (root mean square value below 5 µrad in average considering stars of magnitude 6 and below).

### Performances assessment:

LEO space debris detection and IOD performances have been assessed for a system according to the second embodiment (two satellites flying in an "in line" formation on a SSO orbit and providing ten measurements for a single observation, namely two mono-static ranges, two mono-static range rates, one bi-static range, one bi-static range rate, two azimuths and two elevation angles) with a radar instrument operating at 50 GHz according to the option previously described with the cryogenic LNA, and with an optical camera according to the option previously described with the dioptric camera.

Detection performances are illustrated by figures 17 to 19. Figure 17 shows the distribution of the detectable debris size (in mm) for debris size between 5 and 50 mm. The debris size distribution is nearly uniform, with some variations due to RCS fluctuations. The targeted small debris population can hence be detected.

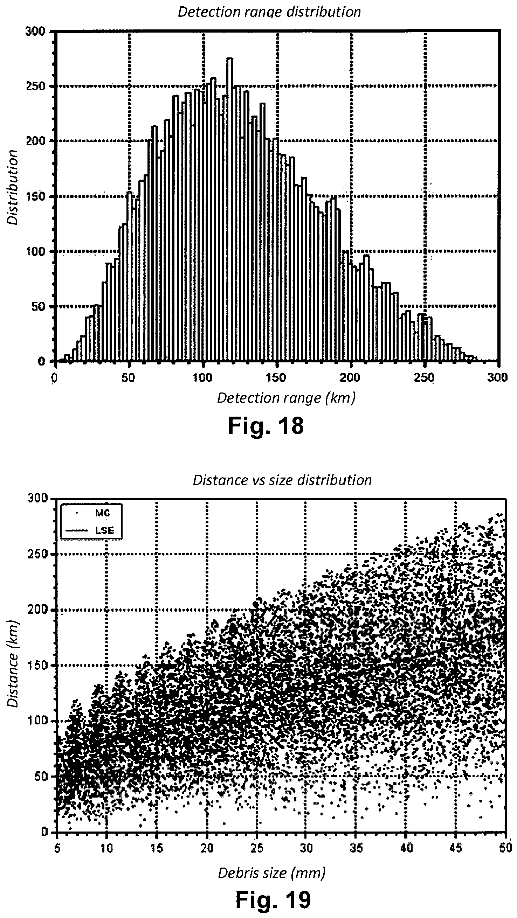

Figure 18 shows the distribution of the detection range (distance to the radar instrument) for the detected debris. The mean detection range is about 124 km; the median detection range is about 119 km; the maximum detection range is about 300 km.

Obviously, the detection range for smaller debris is shorter than for the larger ones. Figure 19 depicts a cross correlation of the detection range and the size of the space debris. It shows for example that space debris with a size comprised between 5 and 10 mm are detected with a detection range less than 130 km (with a mean detection range around 70 km), while space debris with a size comprised between 45 to 50 mm are detected with a detection range up to around 300 km (with a mean detection range around 180 km). On figure 19, "MC" stands for "Monte-Carlo" and "LSE" stands for "Least Square Error fitting".

A preliminary assessment of the IOD performances (i.e. cataloguing accuracy performances) has been estimated using a measurement covariance matrix (including cross correlation and bias terms) and a measurement propagation matrix.

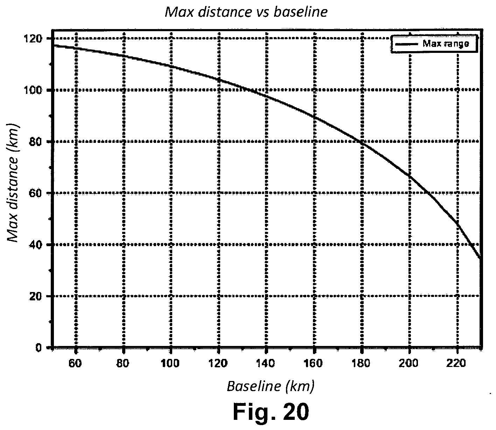

Figure 20 is a graph with a curve depicting the maximum distance to the center of the baseline (in km) as a function of the baseline (in km). A baseline (distance separating the two satellites along the track) of 140 km provides the possibility to detect a debris up to a distance of around 100 km to the center of the baseline. It appears as a good compromise between IOD performances and the average distance between space debris and the center of the baseline.

IOD performances have been assessed for different cases of LEO space debris position and velocity.

For the cases considered, the average position error is below 0.5 m for baselines comprised between 100 km and 200 km.

For most of the cases, the average velocity error is below 2 × 10⁻³ m/s for baselines comprised between 100 km and 200 km.

The average position error and the average velocity error are pretty low for most of the cases considered, thus showing very good performances that can be achieved for an IOD performed on the basis of measurements provided by the satellites of the system with a single observation of a piece of space debris.

The average debris position error has been propagated (using a simplified J2 secular propagator) 48 hours after the IOD. The EU SST consortium's requirement (less than 200 m of error position error after 48 hours) is satisfied for most of the cases considered for baselines comprised between 100 km and 200 km. Cases for which the requirement is not met are generally related to pieces of space debris for which the integration time (time of presence in the sensors field of view) is usually low due to significant relative velocity.

The average debris position error propagated 48 hours after the IOD has also been assessed for a case where a DORIS receiver is embarked on board the satellites for better accuracy in the determination of the position and the velocity of the satellite. The use of a DORIS receiver significantly improve the IOD performances by 25% in average.

An assessment of the IOD performances that could be achieved with three satellites equipped only with optical cameras (thus providing six angle measurements) or three satellites equipped only with radar instruments (thus providing up to ten radar measurements) with instruments (optical camera or radar) identical to those considered for the performance assessment discussed above, shows that the average position error 48 hours following an IOD is about two orders of magnitude above the required accuracy (in other words, the average position error 48 hours following an IOD is between 10 and 20 km when only optical measurements or only radar measurements are used).

It is clear from the above description that the present invention achieves its objectives through its various features and their advantages. In particular, using a mix of radar and optical measurements when performing the IOD significantly increases the accuracy when the IOD is performed based on a single observation.

It should be noted that the different embodiments considered above have been described as non-limiting examples, and that other variants are therefore conceivable. In particular, the invention has been described mainly considering LEO space debris. However, this does not preclude the possibility of considering space debris orbiting at other altitudes, for example at MEO ("Medium Earth Orbit") or GEO ("Geostationary Earth Orbit") orbits. Different types of formation flight could be considered; the choice of one specific formation flight is only a variant of the invention. Also, different types of radar instruments or optical cameras could be considered; the choice of one specific instrument for radar or optical measurement is only a variant of the invention.

## Claims

1. A method (50) for determining an initial orbit of a piece of space debris (15) orbiting around the Earth (20), the method comprising:
• placing (51) a group of at least two satellites (10) flying in formation in orbit around the Earth (20), wherein:
- each satellite (10) comprises a radar instrument configured to provide a mono-static radar measurement, and/or to participate with another satellite (10) of the group in a bi-static radar measurement of the piece of space debris (15),
- each satellite (10) comprises an optical camera configured to provide an optical measurement of the piece of space debris (15),
- a boresight direction and a field of view of the optical camera being similar to a boresight direction and a field of view of the radar instrument and defining a boresight direction and a field of view of the satellite (10),
- the satellites of the group are configured so that beams (11) defined respectively for each satellite (10) by the boresight direction and the field of view of the satellite are configured to intersect in a volume of interest (12) according to a scanning pattern,
• obtaining (52) from the group of satellites (10) a measurement for at least eight independent geometrical parameters of the piece of space debris (15) when it passes in the volume of interest (12), each independent geometrical parameter being one of:
- a radar measurement comprising a mono-static range or range rate of the piece of space debris (15) for a satellite (10), or a bi-static range or range rate of the piece of space debris (15) for a pair of satellites (10),
- an optical measurement comprising an azimuth or an elevation angle of the piece of space debris (15) for a satellite (10),
the measurements obtained from the group of satellites (10) being a mix of radar and optical measurements,
• determining (53) an initial orbit of the piece of space debris (15) based on the measurements obtained.

2. The method (50) according to claim 1 wherein the piece of space debris (15) is in low Earth orbit.

3. The method (50) according to claim 2 wherein the group of satellites (10) is flying in formation along a Sun-synchronous dawn-dusk orbit (22).

4. The method (50) according to claim 3 wherein the Sun-synchronous dawn-dusk orbit (22) is an eccentric orbit with an eccentricity parameter comprised between 0.01 and 0.115.

5. The method (50) according to any one of claims 1 to 4 wherein
the group of satellites (10) comprises at least two satellites,
the radar instrument of each of the two satellites (10) comprises a transmission module and a reception module configured for mono-static radar measurement,
the reception module of at least one of the two satellites (10) being further configured for bi-static radar measurement based on a signal transmitted by the transmission module of the other satellite (10) and reflected by the piece of space debris (15),
at least ten independent geometrical parameters of the piece of space debris (15) are obtained from the group of satellites (10), namely:
- a mono-static range and a mono-static range rate of the piece of space debris (15) for each of the two satellites (10),
- an azimuth and an elevation angle of the piece of space debris (15) for each of the two satellites (10),
- a bi-static range and a bi-static range rate of the piece of space debris (15) for the pair formed by the two satellites (10).

6. The method (50) according to any one of claims 1 to 4 wherein
the group of satellites (10) comprises at least a master satellite and two companion satellites,
the radar instrument of the master satellite comprising a transmission module and a reception module configured for mono-static radar measurement,
the radar instrument of each of the two companion satellites comprising a reception module configured for bi-static radar measurement based on a signal transmitted by the transmission module of the master satellite and reflected by the piece of space debris (15),
at least twelve independent geometrical parameters of the piece of space debris (15) are obtained from the group of satellites (10), namely:
- a mono-static range and a mono-static range rate of the piece of space debris (15) for the master satellite,
- an azimuth and an elevation angle of the piece of space debris (15) for the master satellite and for each of the two companion satellites,
- a bi-static range and a bi-static range rate of the piece of the space debris (15) for each pair formed by the master satellite and each of the two companion satellites.

7. The method (50) according to any one of claims 1 to 6 wherein the satellites (10) of the group are flying in an "in line" formation, meaning that at a given time all orbital parameters of the different satellites (10) are essentially identical at the exception of the true anomaly.

8. The method (50) according to any one of claims 1 to 6 wherein the group comprises at least three satellites (10) flying in a "cartwheel" formation, all the satellites at the exception of a central satellite (10-c) having an eccentricity offset with regard to the central satellite and a perigee argument phase difference so as to form an ellipse (26) in the orbital plane.

9. The method (50) according to any one of claims 1 to 8 wherein at least two satellites (10) of the group each comprise a GNSS receiver and communicate with one another via an inter-satellite link to exchange differential GNSS measurements for improving a determination of a position and a velocity of each of the two satellites.

10. The method (50) according to any one of claims 1 to 9 wherein at least one of the satellites (10) of the group comprises a DORIS receiver for improving a determination of a position and a velocity of the satellite.

11. The method (50) according to any one of claims 1 to 10 wherein at least two satellites (10) of the group communicate with one another via an inter-satellite link to perform clock synchronization of their radar instrument.

12. The method (50) according to any one of claims 1 to 11 wherein, for at least one satellite (10) of the group, the boresight direction of the satellite is orientated by electronically steering the radar instrument and mechanically steering the optical camera, and/or by steering the satellite's body.

13. A space surveillance system comprising a group of at least two satellites (10) intended to fly in formation in orbit around the Earth (20), wherein:
each satellite (10) comprises a radar instrument configured to provide a mono-static radar measurement, and/or to participate with another satellite (10) of the group in a bi-static radar measurement of the piece of space debris (15),
each satellite (10) comprises an optical camera configured to provide an optical measurement of the piece of space debris (15),
a boresight direction and a field of view of the optical camera being similar to a boresight direction and a field of view of the radar instrument and defining a boresight direction and a field of view of the satellite (10),
the satellites of the group being configured so that beams (11) defined respectively for each satellite (10) by the boresight direction and the field of view of the satellite are configured to intersect in a volume of interest (12) according to a scanning pattern,
the group of satellites (10) being configured to provide a measurement for at least eight independent geometrical parameters of the piece of space debris (15) when it passes in the volume of interest (12), each independent geometrical parameter being one of:
- a radar measurement comprising a mono-static range or range rate of the piece of space debris (15) for a satellite (10), or a bi-static range or range rate of the piece of space debris (15) for a pair of satellites (10),
- an optical measurement comprising an azimuth or an elevation angle of the piece of space debris (15) for a satellite (10),
the measurements provided being a mix of radar and optical measurements and being used for determining an initial orbit of the piece of space debris.

14. The system according to claim 13 wherein
the group of satellites (10) comprises at least two satellites,
the radar instrument of each of the two satellites (10) comprising a transmission module and a reception module configured for mono-static radar measurement,
the reception module of at least one of the two satellites (10) being further configured for bi-static radar measurement based on a signal transmitted by the transmission module of the other satellite (10) and reflected by the piece of space debris (15),
the group of satellites (10) being configured to provide at least ten independent geometrical parameters of the piece of space debris (15) when it passes in the volume of interest (12), namely:
- a mono-static range and a mono-static range rate of the piece of space debris (15) for each of the two satellites (10),
- an azimuth and an elevation angle of the piece of space debris (15) for each of the two satellites (10),
- a bi-static range and a bi-static range rate of the piece of space debris (15) for the pair formed by the two satellites (10).

15. The system according to claim 13 wherein
the group of satellites (10) comprises at least a master satellite and two companion satellites,
the radar instrument of the master satellite comprising a transmission module and a reception module configured for mono-static radar measurement,
the radar instrument of each of the two companion satellites comprising a reception module configured for bi-static radar measurement based on a signal transmitted by the transmission module of the master satellite and reflected by the piece of space debris (15),
the group of satellites (10) being configured to provide at least twelve independent geometrical parameters of the piece of space debris (15) when it passes in the volume of interest (12), namely:
- a mono-static range and a mono-static range rate of the piece of space debris (15) for the master satellite,
- an azimuth and an elevation angle of the piece of space debris (15) for the master satellite and for each of the companion satellites,
- a bi-static range and a bi-static range rate of the piece of the space debris (15) for each pair formed by the master satellite and each of the two companion satellites.

16. The system according to claim 13 wherein
the group comprises at least three satellites (10),
the radar instrument of each of the three satellites (10) comprising a transmission module and a reception module configured for mono-static radar measurement and for bi-static radar measurement based on a signal transmitted by the transmission module of any one of the two other satellites (10) and reflected by the piece of space debris (15),
the group of satellites (10) being configured to provide at least eighteen independent geometrical parameters of the piece of space debris (15) when it passes in the volume of interest (12), namely:
- a mono-static range and a mono-static range rate of the piece of space debris (15) for each of the three satellites (10),
- an azimuth and an elevation angle of the piece of space debris (15) for each of the three satellites (10),
- a bi-static range and a bi-static range rate of the piece of the space debris (15) for each pair of satellites (10) that can be formed from the three satellites (10).
